# EUROPEAN PATENT APPLICATION

(11) **EP 4 283 705 A1**
(43) Date of publication of application: **29.11.2023**
(21) Application number: 22214512.0
(22) Date of filing: 19.12.2022
(51) Int. Cl.: H01M 4/131, H01M 4/133, H01M 4/134, H01M 4/505, H01M 4/525, H01M 4/58, H01M 10/0525, H01M 10/0567, H01M 10/0587, H01M 4/587

(54) **ELECTROLYTE, ELECTROCHEMICAL DEVICE THEREOF, AND ELECTRONIC DEVICE THEREOF**

(30) Priority: 27.05.2022 CN 202210593779
(71) Applicant: AESC Japan Ltd., Kanagawa, 2520012 (JP)
(72) Inventor: Wang, Renhe, Jiangyin City, Wuxi City, Jiangsu Province (CN); Wang, Ziyuan, Jiangyin City, Wuxi City, Jiangsu Province (CN); Yu, Le, Jiangyin City, Wuxi City, Jiangsu Province (CN)
(74) Representative: Becker, Eberhard

(57) **Abstract**

An electrolyte, an electrochemical device thereof, and an electronic device thereof are provided. An electrolyte includes vinylene carbonate and a carboxylate-based compound. Based on a mass of the electrolyte, a mass percentage of the vinylene carbonate is A%, a mass percentage of the carboxylate-based compound is B%, and the electrolyte satisfies: a value of A/B ranges from 0.1 to 10, and a value of A+B ranges from 1.1 to 6. In the electrolyte provided by the disclosure, the film formation on the surface of the negative electrode is improved, and the internal resistance is optimized. In this way, the electrochemical device exhibits good cycle performance at high temperature and room temperature and favorable capacity performance at high temperature and achieves low internal resistance.

## Description

### BACKGROUND

### Technical Field

The disclosure relates to the technical field of electrolytes, and in particular, to an electrolyte, an electrochemical device thereof, and an electronic device thereof.

### Description of Related Art

Since lithium-ion batteries exhibit important advantages of high voltage and high capacity and features long cycle life and good safety performance, lithium-ion batteries have broad application prospects in portable electronic equipment, electric vehicles, space technology, and defense industry.

The electrolyte is the "blood" of lithium batteries, is one of the four key raw materials of lithium batteries, and is the carrier of ion transport in batteries. The electrolyte conducts lithium ions between the positive and negative electrodes and has an important impact on the energy density, specific capacity, operating temperature range, cycle life, and safety performance of lithium batteries.

The performance of lithium-ion batteries, especially the performance of high-voltage lithium-ion batteries, is mainly determined by the composition and properties of the positive electrode active material and electrolyte therein. In order to develop a suitable high-performance electrolyte, suitable electrolyte additives are often added to the electrolyte. Commonly used electrolyte additives include boron-containing additives, organic phosphorus-based additives, carbonate ester-based additives, carboxylate-based additives, sulfur-containing additives, ionic liquid additives, and the like.

At present, if vinylene carbonate (VC), a common negative electrode film-forming additive, is used alone, it is difficult to take into account both the high temperature and room temperature cycle performance and low resistance of the battery. Although the use of carboxylate-based additives alone can improve the impedance of the battery, the stability of the negative electrode is poor, and the application of carboxylate-based compound is thus limited.

### SUMMARY

In view of the detects of the related art, the disclosure aims to provide an electrolyte, an electrochemical device thereof, and an electronic device thereof. Through the electrolyte provided by the disclosure, the film formation on the surface of the negative electrode is improved, the internal resistance is optimized, the cycle performance at high temperature and room temperature in the electrochemical device is enhanced, the capacity performance at high temperature is improved, and lower internal resistance is achieved.

One of the aims of the disclosure is to provide an electrolyte, and the following technical solutions are adopted in the disclosure.

An electrolyte includes vinylene carbonate and a carboxylate-based compound.

Based on a mass of the electrolyte, a mass percentage of the vinylene carbonate is A%, and a mass percentage of the carboxylate compound is B%, and the electrolyte satisfies: a value of A/B ranges from 0.1 to 10, and a value of A+B ranges from 1.1 to 6.

In the electrolyte provided by the disclosure, vinylene carbonate and a carboxylate-based compound are used in combination to cause a copolymerization reaction of the two. In the carboxylate-based compound, the carboxylate carbonyl group, which is well combined with lithium ions and can provide lithium ion migration sites, is introduced into the negative electrode solid electrolyte film formed mainly by vinylene carbonate. By adjusting the content ratio of the two, the film formation on the surface of the negative electrode is improved and the internal resistance is optimized, so that the lithium battery exhibits good cycle performance at high temperature and room temperature and favorable capacity performance at high temperature and achieves low internal resistance.

In the disclosure, A and B satisfy: the value A ranges from 0.1 to 5. For instance, the value range of A is 0.1, 0.2, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or 5 and so on. If A is excessively small, the amount of film-forming additives is excessively small, and the protective effect cannot be achieved, but if A is excessively large, the polymerization reaction may be excessively strong, and the battery impedance may increase sharply. The value of B ranges from 0.1 to 5, for example, the value range of B is 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or 5 and so on. If the amount of carboxylate-based compound is excessively small, such as less than 0.1%, the film-forming effect is not obvious, but if an excessive amount of carboxylate-based compound is used, such as greater than 5%, the impedance may also increase sharply. A/B is 0.1 to 10, for example, A/B is 0.1, 0.5, 1, 1.5, 2, 2.5, 3, 3.5, 4, 4.5, 5, 5.5, 6, 6.5, 7, 7.5, 8, 8.5, 9, 9.5, or 10 and the like. A+B is 1.1 to 6, for example, A+B is 1.1, 1.5, 2, 2.5, 3, 3.5, 4, 4.5, 5, 5.5, or 6 and the like. If A/B is excessively small, the carboxylic acid content is relatively excessive, which will consume carboxylate in the negative electrode, resulting in side reactions. If A/B is excessively large, the content of carboxylate is excessively small relatively, and the effect of reducing the impedance together with vinylene carbonate may not be obvious. If A+B is excessively small, the film formation effect may be insignificant, but if A+B is excessively large, the battery impedance may be excessively large.

Preferably, the value of A/B ranges from 0.7 to 3, and the value of A+B ranges from 1.1 to 4.

The carboxylate-based compound is a compound represented by formula (I): 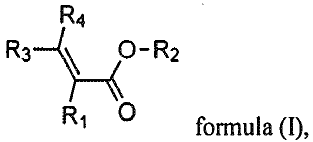 where R₁, R₃, and R₄ are each independently selected from hydrogen, substituted or unsubstituted C₁₋₁₂ hydrocarbon groups; and R₂ is selected from C₁₋₁₂ substituted or unsubstituted hydrocarbon groups, and when substituted, the substituent is a halogen atom. Herein, for illustration, the C₁₋₁₂ hydrocarbon group refers to a hydrocarbon group containing 1 to 12 carbon atoms.

The compound represented by formula (I) is any one or a mixture of two or more of dimethyl fumarate 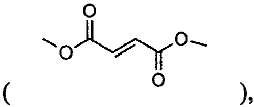 methyl methacrylate 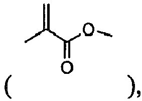 dimethyl maleate 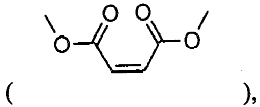 1,1,1,3,3,3-hexafluoroisopropyl methacrylate 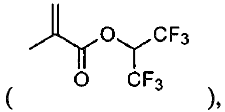 and vinyl methacrylate 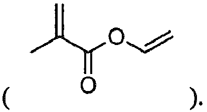 A typical but non-limiting combination of the mixture is a mixture of two, three, four, or five, such as a mixture of dimethyl fumarate and methyl methacrylate, a mixture of dimethyl fumarate and dimethyl maleate, a mixture of dimethyl fumarate and 1,1,1,3,3,3-hexafluoroisopropyl methacrylate, a mixture of dimethyl fumarate and vinyl methacrylate, a mixture of dimethyl fumarate, methyl methacrylate, and dimethyl maleate, a mixture of dimethyl fumarate, methyl methacrylate, and 1,1,1,3,3,3-hexafluoroisopropyl methacrylate, a mixture of dimethyl fumarate, methyl methacrylate, and vinyl methacrylate, a mixture of methyl methacrylate, dimethyl maleate, and 1,1,1,3,3,3-hexafluoroisopropyl methacrylate, a mixture of methyl methacrylate, dimethyl maleate, and vinyl methacrylate, a mixture of dimethyl maleate, 1,1,1,3,3,3-hexafluoroisopropyl methacrylate, and vinyl methacrylate, a mixture of dimethyl fumarate, methyl methacrylate, dimethyl maleate, and 1,1,1,3,3,3-hexafluoroisopropyl methacrylate, a mixture of dimethyl fumarate, methyl methacrylate, dimethyl maleate, and vinyl methacrylate, a mixture of methyl methacrylate, dimethyl maleate, 1,1,1,3,3,3-hexafluoroisopropyl methacrylate, and vinyl methacrylate, and a mixture of dimethyl fumarate, methyl methacrylate, dimethyl maleate, 1,1,1,3,3,3-hexafluoroisopropyl methacrylate, and vinyl methacrylate.

The electrolyte also contains ethylene carbonate (EC), and based on the mass of the electrolyte, a mass percentage of the ethylene carbonate is C%, and the electrolyte satisfies: a value of C ranges from 15 to 60, for example, 15, 20, 25, 30, 35, 40, 45, 50, 55, or 60 and the like. If C is excessively small, the conductivity of the electrolyte may be reduced, and the battery impedance may be affected. If C is excessively large, the electrolyte may be too soluble to the components in the solid electrolyte film, so the film formation may be unstable, and the performance may be affected. The value of C/(A+B) ranges from 5 to 20, such as 3, 4, 5, 6, 7, 8, 9, 10, 11, 12, 13, 14, 15, 16, 17, 18, 19, or 20 and the like. If C/(A+B) is excessively small, the solvent may be excessively small relative to the film-forming additive, and the battery impedance may increase. If C/(A+B) is excessively large, the solvent may be excessively large relative to the film-forming additive, and the film-forming may be unstable.

Preferably, the value of C/(A+B) ranges from 8.3 to 15.

Another aim of the disclosure is to provide an electrochemical device including a positive electrode, a negative electrode, a separator, and the abovementioned electrolyte.

The electrochemical device provided by the disclosure includes any device in which an electrochemical reaction occurs, and specific examples thereof include all kinds of primary batteries, secondary batteries, fuel cells, solar cells, or capacitors. In particular, the electrochemical device is a lithium secondary battery including a lithium metal secondary battery, a lithium-ion secondary battery, a lithium polymer secondary battery, or a lithium-ion polymer secondary battery.

In some embodiments, the electrochemical device provided by the disclosure is an electrochemical device including a positive electrode having a positive electrode active material capable of occluding and releasing metal ions and a negative electrode having a negative electrode active material capable of occluding and releasing metal ions.

The positive electrode includes a positive electrode active material, and the positive electrode active material is selected from any one or a mixture of two or more of lithium iron phosphate, lithium-nickel transition metal composite oxide, and lithium-nickel-manganese composite oxide having a spinel structure.

The general formula of the lithium-nickel transition metal composite oxide is Li₁₊ₐNiₓCo_{y}Mn_{z}M_{b}O₂₋ₑXₑ, and in the general formula, -0.2<a<0.2, 0.3≤x≤0.95, 0.05≤y≤0.3, 0.03≤z≤0.4, 0≤b≤0.05, 0≤e≤0.1, M is selected from any one or a combination of two or more of Al, Ti, Zr, Nb, Sr, Sc, Sb, Y, Ba, Co, and Mn, and X is selected from F and/or Cl. It should be noted that the general chemical formula of the lithium-nickel transition metal composite oxide is the chemical formula when the state of charge (SOC) of the battery is 0%.

The negative electrode includes a negative electrode active material and a current collector, and the negative electrode active material includes graphite or a silicon-carbon negative electrode active material.

The silicon-carbon negative electrode active material is selected from any one or a mixture of two or more of silicon, silicon oxide compounds, and silicon-based alloys.

The negative electrode further includes a carbon material, and the carbon material is selected from any one or a mixture of two or more of acetylene black, conductive carbon black, carbon fiber, carbon nanotube, and Ketjen black.

A chlorine content in the separator is less than or equal to 20 ppm. Preferably, the chlorine content in the separator is 7 ppm to 20 ppm, such as 3 ppm, 5 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, or 20 ppm and the like. If the chlorine content in the separator is excessively low, the impact of chlorine on the battery may be reduced, but limited to the current separator technology, it is difficult to further reduce the chlorine content. If the chlorine content in the separator exceeds 20 ppm, it will quench the polymerization reaction of SVC and additives, and the battery performance may be negatively affected.

Another aim of the disclosure is to provide an electronic device including the abovementioned electrochemical device.

The electronic device includes, but is not limited to, the following types, such as a notebook computer, a pen input computer, a mobile computer, an e-book player, a portable telephone, a portable fax machine, a portable copier, a portable printer, stereo headphones, a videocassette recorder, a liquid-crystal display TV, a portable cleaner, a portable CD player, a mini-disc, a transceiver, an electronic notepad, a calculator, a memory card, a portable recorder, a radio, a backup power supply, a motor, a car, a motorcycle, a power-assisted bicycle, a bicycle, a lighting appliance, a toy, a game console, a clock, an electric tool, a flash light, a camera, a large-scale domestic storage battery, or a lithium-ion capacitor and the like.

Compared to the related art, beneficial effects of the disclosure include the following.

In the electrolyte provided by the disclosure, by using the vinylene carbonate and carboxylate-based compound together and adjusting their contents, the film formation on the surface of the negative electrode is improved and the internal resistance is optimized. In this way, the electrochemical device exhibits good cycle performance at high temperature and room temperature and favorable capacity performance at high temperature and achieves low internal resistance.

To make the aforementioned more comprehensible, several embodiments accompanied with drawings are described in detail as follows.

### DESCRIPTION OF THE EMBODIMENTS

The technical solutions of the disclosure are further described below and through specific embodiments.

Unless otherwise specified, various raw materials of the disclosure can be purchased commercially or prepared according to conventional methods in the art.

An electrolyte provided by the disclosure includes vinylene carbonate and a carboxylate-based compound.

Based on a mass of the electrolyte, a mass percentage of the vinylene carbonate is A%, and a mass percentage of the carboxylate-based compound is B%, and the electrolyte satisfies: a value of A ranges from 0.1 to 5, a value of B ranges from 0.1 to 5, a value of A/B ranges from 0.1 to 10, and a value of A+B ranges from 1.1 to 6.

In the disclosure, an electrochemical device is a lithium-ion battery. The lithium-ion battery is a primary lithium battery or a secondary lithium battery and includes: a positive electrode, a negative electrode, a separator located between the positive electrode and the negative electrode, and an electrolyte.

The preparation method of the secondary lithium battery of the disclosure is provided as follows.

### (1) Preparation of LFP (LiFePO₄) Positive Electrode

A positive electrode active material (LiFePO₄), polyvinylidene fluoride (as a binder), and Super P (as a conductive agent) were mixed in a weight ratio of 97:2:1, added with N-methylpyrrolidone (NMP), and stirred under the action of a vacuum mixer until the system is uniform and transparent to obtain a positive electrode slurry. The positive electrode slurry was uniformly coated on an aluminum foil. The aluminum foil was dried at room temperature and then transferred to an oven for drying, and then the positive electrode (electrode piece) was obtained by cold pressing and slitting.

### (2) Preparation of Graphite Negative Electrode

An artificial graphite (as a negative electrode active material), Super P (as a conductive agent), sodium carboxymethyl cellulose (CMC-Na; as a thickener), and styrene butadiene rubber (SBR; as a binder) were mixed in a mass ratio of 96:1:1:2. Deionized water was added, and a negative electrode slurry was obtained under the action of a vacuum mixer. The negative electrode slurry was uniformly coated on a negative electrode current collector copper foil. The copper foil was dried at room temperature and then transferred to an oven for drying, and then the negative electrode (electrode piece) was obtained by cold pressing and slitting.

### (3) Preparation of Electrolyte

In an argon atmosphere glove box with a water content of <10 ppm, battery-grade ethylene carbonate (EC) and ethyl methyl carbonate (EMC) were mixed according to the ratio to form an organic solvent. Other components were added quantitatively according to the composition of the electrolyte described in the tables provided in the following paragraphs, and were mixed evenly to obtain the electrolyte. The content of each component in the table is the weight percentage calculated based on a total weight of the electrolyte, where DTD is ethylene sulfate.

### (4) Preparation of Separator Film

A polypropylene film was used as a separator film.

### (5) Preparation of Secondary Battery

A polypropylene thin film (PP) with a thickness of 12 µm was used as a separator film. The positive electrode, the separator film, and the negative electrode prepared above were laminated in sequence, so that the separator film was placed between the positive electrode and the negative electrode for separation, and then covered with aluminum laminated film, transferred to a vacuum oven for drying at 120 °C, injected with 3.0 g/Ah of the above-prepared electrolyte, and then sealed for electrolyte formation. Finally, a soft-pack battery (i.e., a lithium-ion battery) with a capacity of 1 Ah was obtained.

In the disclosure, the lithium-ion battery obtained has a negative electrode gram capacity of 350 mAh/g, a liquid injection coefficient of 3 g/Ah, a cell capacity of 1 Ah, a negative electrode mass of 3g, and an electrolyte mass of 3g.

The conditions for the formation of the electrolyte in the iron-lithium cell according to the disclosure are provided as follows.

The steps of forming the electrolyte in the iron-lithium cell are provided as follows: After being injected, the electrolyte was kept in a hot pressure environment of 0.1 MPa, was charged at 0.02 C for 17 minutes at 45 °C in a static state, and then charged to 0.3 Ah at 0.02 C after standing for 5 minutes. The air bag was then cut off and vacuum-sealed, the electrolyte was left at room temperature for 48 hours, and the formation of the electrolyte was then completed.

Herein, in the examples provided by the disclosure, the following five compounds are used as the compound represented by formula (I). Compound 1 is methyl methacrylate, compound 2 is dimethyl fumarate, compound 3 is dimethyl maleate, compound 4 is 1,1,1,3,3,3-hexafluoroisopropyl methacrylate, and compound 5 is vinyl methacrylate.

The secondary battery provided by the disclosure may be tested through the following methods.

### (1) Secondary Battery Cycle Test

In an oven at a specified temperature (room temperature 25°C or high temperature 45°C), cyclic charge and discharge were performed at a current of 1 C within a specified potential interval, and the discharge capacity of each cycle was recorded. When the battery capacity reached 80% of the capacity of the first cycle, the test was ended.

### (2) Secondary Battery Direct Current Resistance (DCR) Test

At a specified temperature, when the battery was discharged at a current of 1 C to 50% SOC (state of charge, reflecting the remaining capacity of the battery), the current was turned up to 4 C and held for 30 seconds. The difference between the updated stable voltage and the original platform voltage was detected, and the ratio of its value to the 3 C current value was the DC resistance of the battery. The DCR test result performed after the battery is fully charged for the first time is the initial DCR of the battery.

### (3) High Temperature Capacity Retention Rate Test of Secondary Battery

After being fully charged, the secondary battery was placed in an incubator at 60 °C, taken out after 30 days, cooled to room temperature, and then discharged at a rate of 0.33 C to the cut-off voltage, and the percentage of its capacity relative to the initial discharge capacity was compared.

Herein, the cut-off voltage of charge and discharge is as follows: LFP-graphite is 2.5 V to 3.65 V.

(4) The chlorine content in the separator was tested through the method provided as follows.

The separator was burned in an automatic sample combustion apparatus (AQF-100 manufactured by Mitsubishi Chemical Analytech), and then absorbed into an absorbing liquid (mixed solution of Na₂CO₃ and NaHCO₃), and the absorbing liquid was injected into an ion chromatography apparatus (manufactured by Dionex, ICS1500, column (separation column: AS12A, guard column: AG12A), suppressor ASRS300) to measure the total chlorine content.

In the disclosure, the electrolyte compositions of Examples 1 to 10, Comparative Example 1, Comparative Example 2, and Comparative Example 3 are shown in Table 1-1. The lithium-ion battery was prepared by the above preparation methods, and its performance was tested. The test results are shown in Table 1-2.

**Table 1-1**

| | Electrolyte (wt) | | | | | | | |
|---|---|---|---|---|---|---|---|---|
| | LiPF₆ (%) | EMC (%) | DTD (%) | VC A (%) | Compound 1 (%) | EC C (%) | A+B | A/B |
| Example 1 | 14 | 59.4 | 0.5 | 1 | 0.1 | 25 | 1.1 | 10.00 |
| Example 2 | 14 | 59 | 0.5 | 1 | 0.5 | 25 | 1.5 | 2.00 |
| Example 3 | 14 | 58.5 | 0.5 | 1 | 1 | 25 | 2 | 1.00 |
| Example 4 | 14 | 56.5 | 0.5 | 1 | 3 | 25 | 4 | 0.33 |
| Example 5 | 14 | 54.5 | 0.5 | 1 | 5 | 25 | 6 | 0.20 |
| Example 6 | 14 | 59.4 | 0.5 | 0.1 | 1 | 25 | 1.1 | 0.10 |
| Example 7 | 14 | 59 | 0.5 | 0.5 | 1 | 25 | 1.5 | 0.50 |
| Example 8 | 14 | 57.5 | 0.5 | 2 | 1 | 25 | 3 | 2.00 |
| Example 9 | 14 | 56.5 | 0.5 | 3 | 1 | 25 | 4 | 3.00 |
| Example 10 | 14 | 54.5 | 0.5 | 5 | 1 | 25 | 6 | 5.00 |
| Comparative Example 1 | 14 | 59.5 | 0.5 | 1 | - | 25 | 1 | - |
| Comparative Example 2 | 14 | 59.5 | 0.5 | | 1 | 25 | 1 | - |
| Comparative Example 3 | 14 | 48.5 | 0.5 | 11 | 1 | 25 | 12 | 11.00 |

| | | | | | | | | |
|---|---|---|---|---|---|---|---|---|
| Note: "-" means not added, and the notation and its meaning are also applicable below. | | | | | | | | |

**Table 1-2**

| | 80% cycles at room temperature | 80% cycles at high temperature | Initial DCR (mOhm) | Capacity retention rate at 60 °C for 30 days (%) |
|---|---|---|---|---|
| Example 1 | 1078 | 856 | 109 | 93 |
| Example 2 | 1128 | 913 | 109 | 94 |
| Example 3 | 1336 | 1097 | 107 | 95 |
| Example 4 | 1325 | 1089 | 107 | 96 |
| Example 5 | 1067 | 862 | 109 | 90 |
| Example 6 | 1072 | 848 | 113 | 89 |
| Example 7 | 1149 | 852 | 111 | 95 |
| Example 8 | 1535 | 1329 | 105 | 97 |
| Example 9 | 1653 | 1403 | 118 | 97 |
| Example 10 | 1328 | 1126 | 128 | 92 |
| Comparative Example 1 | 1045 | 824 | 114 | 86 |
| Comparative Example 2 | 1061 | 834 | 113 | 86 |
| Comparative Example 3 | 452 | 298 | 144 | 76 |

It can be seen from the data in Table 1-2 that the value range of A+B determines the total amount of additives to form films on the negative electrode. That is, the larger the value, the larger the impedance, and the smaller the value, the poorer the film formation effect. Vinylene carbonate and carboxylate are used simultaneously to reduce impedance. The content of vinylene carbonate determines the film quality but increases the impedance, while the content of carboxylate determines the effect of impedance reduction, but adding too much carboxylate will lead to an opposite effect. Therefore, by controlling A/B and A+B to make them in a suitable range, through their synergistic effect, the performance and strength of the film formation on the negative electrode may be improved, the lithium-ion conductivity can be enhanced, and the impedance can be reduced.

In the disclosure, the electrolyte compositions of Examples 11 to 14 are shown in Table 2-1. The lithium-ion battery was prepared by the above preparation methods, and its performance was tested. The test results are shown in Table 2-2.

**Table 2-1**

| | Electrolyte | | | | | | | |
|---|---|---|---|---|---|---|---|---|
| | LiPF₆ (%) | EMC (%) | DTD (%) | VC A (%) | Compound 1 B (%) | EC C (%) | A+B | A/B |
| Example 8 | 14 | 57.5 | 0.5 | 2 | 1 | 25 | 3 | 2.00 |
| Example 11 | 14 | 57.5 | 0.5 | 1.75 | 1.25 | 25 | 3 | 1.40 |
| Example 12 | 14 | 57.5 | 0.5 | 1.5 | 1.5 | 25 | 3 | 1.00 |
| Example 13 | 14 | 57.5 | 0.5 | 1.25 | 1.75 | 25 | 3 | 0.71 |
| Example 14 | 14 | 57.5 | 0.5 | 1 | 2 | 25 | 3 | 0.50 |

**Table 2-2**

| | 80% cycles at room temperature | 80% cycles at high temperature | Initial DCR (mOhm) | Capacity retention rate at 60 °C for 30 days (%) |
|---|---|---|---|---|
| Example 8 | 1535 | 1329 | 105 | 97 |
| Example 11 | 1276 | 1046 | 107 | 95 |
| Example 12 | 835 | 592 | 112 | 78 |
| Example 13 | 761 | 551 | 112 | 72 |
| Example 14 | 663 | 463 | 113 | 55 |

As can be seen from Table 2, in the preferred range of A+B and A/B, it is found that when the value of A+B ranges from 1.1 to 4 and the value of A/B ranges from 0.7 to 3, a balance between the negative electrode film formation and battery impedance reduction may be effectively achieved.

The electrolyte compositions of Examples 15 to 17 and Comparative example 4 are shown in Table 3-1. The lithium-ion battery was prepared by the above preparation methods, and its performance was tested. The test results are shown in Table 3-2.

**Table 3-1**

| | Electrolyte | | | | | | | | |
|---|---|---|---|---|---|---|---|---|---|
| | LiPF₆ (%) | EMC (%) | DTD (%) | VC A (%) | Compound 1 B (%) | EC C (%) | A+B | A/B | C/ (A+B) |
| Example 8 | 14 | 57.5 | 0.5 | 2 | 1 | 25 | 3 | 2.00 | 8.33 |
| Example 15 | 14 | 52.5 | 0.5 | 2 | 1 | 30 | 3 | 2.00 | 10.00 |
| Example 16 | 14 | 37.5 | 0.5 | 2 | 1 | 45 | 3 | 2.00 | 15.00 |
| Example 17 | 14 | 22.5 | 0.5 | 2 | 1 | 60 | 3 | 2.00 | 20.00 |
| Comparative Example 4 | 14 | 67.5 | 0.5 | 2 | 1 | 15 | 3 | 2.00 | 5.00 |

**Table 3-2**

| | 80% cycles at room temperature | 80% cycles at high temperature | Initial DCR (mOhm) | Capacity retention rate at 60 °C for 30 days (%) |
|---|---|---|---|---|
| Example 8 | 1535 | 1329 | 105 | 97 |
| Example 15 | 1571 | 1356 | 104 | 98 |
| Example 16 | 1361 | 1127 | 110 | 96 |
| Example 17 | 1276 | 1046 | 107 | 95 |
| Comparative Example 4 | 1259 | 1035 | 117 | 95 |

Under the determined optimal total amount and proportion of negative electrode film-forming additives, the ratio of EC relative to the total amount and proportion is regulated, and it can be seen from the data in Table 3-2 that if the ratio is excessively high, the film formation on the surface of the negative electrode may be unstable and the battery performance may be lost, but if the ratio is excessively low, the dissociation of lithium ions may be insufficient, the conductivity of the electrolyte may decrease, and the battery impedance may increase.

The difference between the electrolyte compositions of Examples 18 to 21 and Example 8 is that the types of compounds represented by formula (I) are different. Compound 1 is adopted in Example 8, compound 2 is adopted in Example 18, compound 3 is adopted in Example 19, compound 4 is adopted in Example 20, and compound 5 is adopted in Example 21. Other components are the same as those in Example 8.

The lithium-ion battery was prepared by the above preparation methods, and its performance was tested. The test results are shown in Table 4.

**Table 4**

| | 80% cycles at room temperature | 80% cycles at high temperature | Initial DCR (mOhm) | Capacity retention rate at 60 °C for 30 days (%) |
|---|---|---|---|---|
| Example 8 | 1535 | 1329 | 105 | 97 |
| Example 18 | 1552 | 1331 | 105 | 96 |
| Example 19 | 1550 | 1340 | 105 | 94 |
| Example 20 | 1533 | 1328 | 105 | 97 |
| Example 21 | 1535 | 1308 | 105 | 92 |

It can be seen from the data in Table 4 that in Example 8 and Example 18 to Example 21, different types of compounds represented by formula (I) can be used to enhance the cycle performance of the battery at high temperature and room temperature, to improve the high temperature capacity performance, and to reduce the resistance.

The difference between Examples 22 and 23 compared to Example 8 is that the chlorine content of separator of Example 8 is 7 ppm, and the chlorine contents of the separator of Examples 22 and 23 are 10 ppm and 20 ppm, respectively.

**Table 5**

| | 80% cycles at room temperature | 80% cycles at high temperature | Initial DCR (mOhm), | Capacity retention rate at 60 °C for 30 days (%) |
|---|---|---|---|---|
| Example 8 | 1535 | 1329 | 105 | 97 |
| Example 22 | 1530 | 1294 | 105 | 97 |
| Example 23 | 1137 | 897 | 106 | 88 |

It can be seen from the data in Table 5 that by controlling the chlorine content of the separator to be between 7 and 20 ppm, it can be found that the higher the chlorine content, the more severe the destruction of the film-forming reaction of ethylene carbonate, vinylene carbonate, and carboxylate-based compounds. Further, by controlling the chlorine content of the separator between 7 and 10 ppm, its performance may be effectively improved. Therefore, by controlling the synergistic effect of the chlorine content of the separator, the ethylene carbonate, the vinylene carbonate, and the carboxylate-based compounds, the battery performance may thus be improved.

## Claims

1. An electrolyte, comprising vinylene carbonate and a carboxylate-based compound, wherein
based on a mass of the electrolyte, a mass percentage of the vinylene carbonate is A%, and a mass percentage of the carboxylate-based compound is B%, and the electrolyte satisfies:
a value of A/B ranges from 0.1 to 10, and a value of A+B ranges from 1.1 to 6.

2. The electrolyte according to claim 1, wherein the value of A/B ranges from 0.7 to 3, and the value of A+B ranges from 1.1 to 4.

3. The electrolyte according to claim 1, wherein the carboxylate-based compound is a compound represented by formula (I): 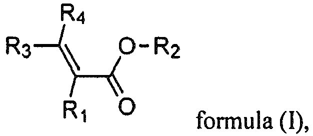
wherein R₁, R₃, and R₄ are each independently selected from hydrogen, substituted or unsubstituted C₁₋₁₂ hydrocarbon groups; and
R₂ is selected from C₁₋₁₂ substituted or unsubstituted hydrocarbon groups, and when substituted, the substituent is a halogen atom.

4. The electrolyte according to claim 3, wherein the compound represented by formula (I) is any one or a mixture of two or more of dimethyl fumarate, methyl methacrylate, dimethyl maleate, 1,1,1,3,3,3-hexafluoroisopropyl methacrylate, and vinyl methacrylate.

5. The electrolyte according to any one of claims 1 to 4, further comprising ethylene carbonate, wherein based on the mass of the electrolyte, a mass percentage of the ethylene carbonate is C%, and the electrolyte satisfies: a value of C/(A+B) ranges from 5 to 20.

6. The electrolyte according to claim 5, wherein the value of C/(A+B) ranges from 8.3 to 15.

7. An electrochemical device, comprising a positive electrode, a negative electrode, a separator, and the electrolyte according to any one of claims 1 to 6.

8. The electrochemical device according to claim 7, wherein the positive electrode comprises a positive electrode active material, and the positive electrode active material is selected from any one or a mixture of two or more of lithium iron phosphate, lithium-nickel transition metal composite oxide, and lithium-nickel-manganese composite oxide having a spinel structure.

9. The electrochemical device according to claims 7 or 8, wherein the negative electrode comprises a negative electrode active material and a current collector, the negative electrode active material comprises graphite or a silicon-carbon negative electrode active material, and
a chlorine content in the separator is less than or equal to 20 ppm.

10. The electrochemical device according to claim 9, wherein the chlorine content in the separator is 7 ppm to 20 ppm.

11. An electronic device, comprising the electrochemical device according to any one of claims 7 to 10.
